# EUROPEAN PATENT APPLICATION

(11) **EP 4 726 492 A1**
(43) Date of publication of application: **15.04.2026**
(21) Application number: 23940102.9
(22) Date of filing: 08.06.2023
(51) Int. Cl.: G05D 105/15, G05D 1/43

(54) **MAPPING CORRECTION METHOD AND APPARATUS, AND STORAGE MEDIUM**

(71) Applicant: Shenzhen Mammotion Innovation Co., Limited, Shenzhen, Guangdong 518000 (CN)
(72) Inventor: WEI, Jidong, Shenzhen, Guangdong 518000 (CN); DU, Pengju, Shenzhen, Guangdong 518000 (CN); WANG, Kai, Shenzhen, Guangdong 518000 (CN)
(74) Representative: Huang, Liwei
(86) International application number: PCT/CN2023/099065
(87) International publication number: WO 2024/250216

(57) **Abstract**

The embodiments of the present disclosure disclose a mapping correction method, an apparatus, and a storage medium, which are applied to a lawn mowing robot. The method includes: obtaining an initial correction position; obtaining a rewinding instruction to rewind toward the original mapping trajectory; obtaining an intersection position between the lawn mowing robot and the original mapping trajectory during the rewinding process and determining the intersection position as a target correction position; deleting the mapping trajectory between the target correction position and the initial correction position and continuing to construct a map based on the target correction position. In this way, according to the initial position where the signal is lost, a return path is recommended to the user for selection in real time, so that the mapping can be continued, and the efficiency and correctness of the lawn mowing robot's mapping are improved.

## Description

### TECHNICAL FIELD

The present disclosure relates to the field of robot technology, and specifically, to a mapping correction method, an apparatus, and a storage medium.

### BACKGROUND

Before a lawn mowing robot performs an automatic operation, an initial operation map needs to be created. The operation map information is used to plan the operation path of the lawn mowing robot. During the initial mapping process, manual tracking of the boundary of the operation map is required. Due to some reasons (such as work negligence), an error occurs between the boundary of the operation map and the tracked boundary of the initial mapping. As a result, it is necessary to clear part of the tracked boundary of the initial mapping, return to the correct position, and continue the tracking and mapping until the tracked boundary is closed, that is, the initial map is established. In practical applications, after a mapping error occurs, it is necessary to restart the mapping, that is, control the lawn mower to return to the initial mapping point and click "Rebuild". Usually, the lawn mower will automatically return to the initial position, which reduces the mapping efficiency. Therefore, the problem of how to improve the mapping efficiency urgently needs to be solved.

### SUMMARY

The embodiments of the present disclosure provide a mapping correction method, apparatus, and storage medium, which can improve the efficiency of map construction.

In a first aspect, the embodiments of the present disclosure provide a mapping correction method applied to a lawn mowing robot, the method comprises:
obtaining an initial correction position;
obtaining a rewinding instruction to rewind toward an original mapping trajectory;
obtaining an intersection position between the lawn mowing robot and the original mapping trajectory during the rewinding process, and determining the intersection position as a target correction position;
deleting a portion of the mapping trajectory between the target correction position and the initial correction position, and continuing the mapping based on the target correction position.

In a second aspect, the embodiments of the present disclosure provide a mapping correction method applied to a display device, the method comprises:
determining an initial correction position;
issuing a rewinding instruction to control a lawn mowing robot to rewind toward an original mapping trajectory;
obtaining an intersection position between the lawn mowing robot and the original mapping trajectory during the rewinding process, and determining the intersection position as a target correction position;
deleting a portion of the mapping trajectory between the target correction position and the initial correction position, and continuing the mapping based on the target correction position.

In a third aspect, the embodiments of the present disclosure provide a mapping correction apparatus, wherein the apparatus is applied to a lawn mowing robot, the apparatus comprises:

a first obtaining unit, a second obtaining unit, a determining unit, and a mapping unit, wherein:
the first obtaining unit is configured to obtain an initial correction position;
the second obtaining unit is configured to obtain a rewinding instruction to rewind toward the original mapping trajectory;
the determining unit is configured to obtain an intersection position between the lawn mowing robot and the original mapping trajectory during the rewinding process and determine the intersection position as a target correction position;
the mapping unit is configured to delete a portion of the mapping trajectory between the target correction position and the initial correction position and continue the mapping based on the target correction position.

In a fourth aspect, the embodiments of the present disclosure provide a mapping correction apparatus, wherein the mapping correction apparatus is applied to a display device, the mapping correction apparatus comprises: a first determining unit, a issuing unit, a second determining unit, and a mapping unit, wherein:
the first determining unit is configured to determine an initial correction position;
the issuing unit is configured to issue a rewinding instruction to control a lawn mowing robot to rewind toward the original mapping trajectory;
the second determining unit is configured to determine an intersection position between the lawn mowing robot and the original mapping trajectory during the rewinding process and determine the intersection position as a target correction position;
the mapping unit is configured to delete a portion of the mapping trajectory between the target correction position and the initial correction position and continue the mapping based on the target correction position.

In a fifth aspect, the embodiments of the present disclosure provide a lawn mowing robot, comprising a processor, a memory, a communication interface, and one or more programs, wherein the one or more programs are stored in the memory and configured to be executed by the processor, and the programs comprise instructions for performing the steps in the first aspect.

In a sixth aspect, the embodiments of the present disclosure provide a display device, comprising a processor, a memory, a communication interface, and one or more programs, wherein the one or more programs are stored in the memory and configured to be executed by the processor, and the programs comprise instructions for performing the steps in the second aspect.

In a seventh aspect, the embodiments of the present disclosure provide a non-transitory computer-readable storage medium, wherein the non-transitory computer-readable storage medium stores a computer program for electronic data exchange, and the computer program enables a computer to perform part or all of the steps described in the first aspect.

In a eighth aspect, the embodiments of the present disclosure provide a non-transitory computer-readable storage medium, wherein the non-transitory computer-readable storage medium stores a computer program for electronic data exchange, and the computer program enables a computer to perform part or all of the steps described in the second aspect.

In a ninth aspect, the embodiments of the present disclosure provide a computer program product, the computer program product comprises a non-transitory computer-readable storage medium storing a computer program, the computer program is operable to enable a computer to perform part or all of the steps described in the first aspect, the computer program product may be a software installation package.

In a tenth aspect, the embodiments of the present disclosure provide a computer program product, the computer program product comprises a non-transitory computer-readable storage medium storing a computer program, the computer program is operable to enable a computer to perform part or all of the steps described in the second aspect, the computer program product may be a software installation package.

Implementing the embodiments of the present disclosure brings the following beneficial effects: The mapping correction method, apparatus, and storage medium described in the present disclosure are applied to a lawn mowing robot. Obtaining an initial correction position. Obtaining a rewinding instruction to rewind toward an original mapping trajectory. obtaining an intersection position between the lawn mowing robot and the original mapping trajectory during the rewinding process, and determining the intersection position as a target correction position. deleting a portion of the mapping trajectory between the target correction position and the initial correction position, and continuing the mapping based on the target correction position. In this way, when there is an error in mapping or the positioning signal is lost, by deleting the mapping trajectory of the lawn mowing robot between the initial correction position and the target correction position and then continuing to perform the mapping from the target correction position, the lawn mowing robot does not need to return to the starting point and re-map when there is a mapping error, thereby improving the mapping efficiency of the lawn mowing robot.

### BRIEF DESCRIPTION OF THE DRAWINGS

To more clearly illustrate the technical solutions in the embodiments of the present disclosure or the prior art, the accompanying drawings used in the description of the embodiments or the prior art will be briefly introduced below. Obviously, the accompanying drawings described below are merely some embodiments of the present disclosure. For those of ordinary skill in the art, other drawings can be obtained based on these drawings without creative efforts.
Figure 1A is a schematic flowchart of a mapping correction method provided by an embodiment of the present disclosure.
Figure 1B is a schematic demonstration diagram of a mapping trajectory provided by an embodiment of the present disclosure.
Figure 1C is another schematic demonstration diagram of a mapping trajectory provided by an embodiment of the present disclosure.
Figure 2 is a schematic flowchart of another mapping correction method provided by an embodiment of the present disclosure.
Figure 3 is a schematic flowchart of another mapping correction method provided by an embodiment of the present disclosure.
Figure 4 is a schematic flowchart of another mapping correction method provided by an embodiment of the present disclosure.
Figure 5 is a structural schematic diagram of an electronic device provided by an embodiment of the present disclosure.
Figure 6 is a functional unit composition block diagram of a mapping correction apparatus 600 provided by an embodiment of the present disclosure.
Figure 7 is a functional unit composition block diagram of a mapping correction apparatus 700 provided by an embodiment of the present disclosure.

### DETAILED DESCRIPTION OF ILLUSTRATIVE EMBODIMENTS

To enable those skilled in the art to better understand the solutions of the present disclosure, the technical solutions in the embodiments of the present disclosure will be clearly and comprehensively described below in conjunction with the accompanying drawings of the embodiments. Obviously, the described embodiments are only a part of the embodiments of the present disclosure, rather than all of them. Based on the embodiments of the present disclosure, all other embodiments obtained by those of ordinary skill in the art without creative efforts shall fall within the protection scope of the present disclosure.

The terms "first", "second", etc. in the specification, claims, and the above - mentioned accompanying drawings of the present disclosure are used to distinguish different objects, rather than to describe a specific order. In addition, the terms "comprise" and "have" and any of their variants are intended to cover non - exclusive inclusions. For example, a process, method, system, product, or device that comprises a series of steps or units is not limited to the listed steps or units, but may optionally include other steps or units not listed, or may optionally include other steps or units inherent to these processes, methods, products, or devices.

The mention of an "embodiment" herein means that the specific features, structures, or characteristics described in conjunction with the embodiment may be included in at least one embodiment of the present disclosure. The phrase does not necessarily refer to the same embodiment at each occurrence in the specification, nor is it an independent or alternative embodiment mutually exclusive of other embodiments. It is expressly and implicitly understood by those skilled in the art that the embodiments described herein can be combined with other embodiments.

In the embodiments of the present disclosure, the electronic device may include a lawn mowing robot or a display device. The display device may include a device with a display function. The display device may include a smartphone (such as an Android phone, an iOS phone, a Windows phone, etc.), a tablet computer, a personal digital assistant (PDA), a car - mounted recorder, a server, a laptop computer, a mobile Internet device (MID, Mobile Internet Devices), or a wearable device (such as a smartwatch, Bluetooth earphones), etc. The above are only examples and not exhaustive, and include but are not limited to the above - mentioned display devices.

In the embodiments of the present disclosure, the mapping trajectory of the lawn mowing robot can be understood as: during its movement, the lawn mowing robot can perform positioning operations at regular or irregular intervals. Each positioning position can be regarded as a waypoint, and the mapping trajectory is obtained by connecting these positioning positions.

In the embodiments of the present disclosure, the lawn mowing robot and the display device may exist independently. A communication connection can be established between the lawn mowing robot and the display device. The display device can be used to control the lawn mowing robot, and the mapping trajectory of the lawn mowing robot can also be displayed on the display device.

The following is a detailed introduction to the embodiments of the present disclosure.

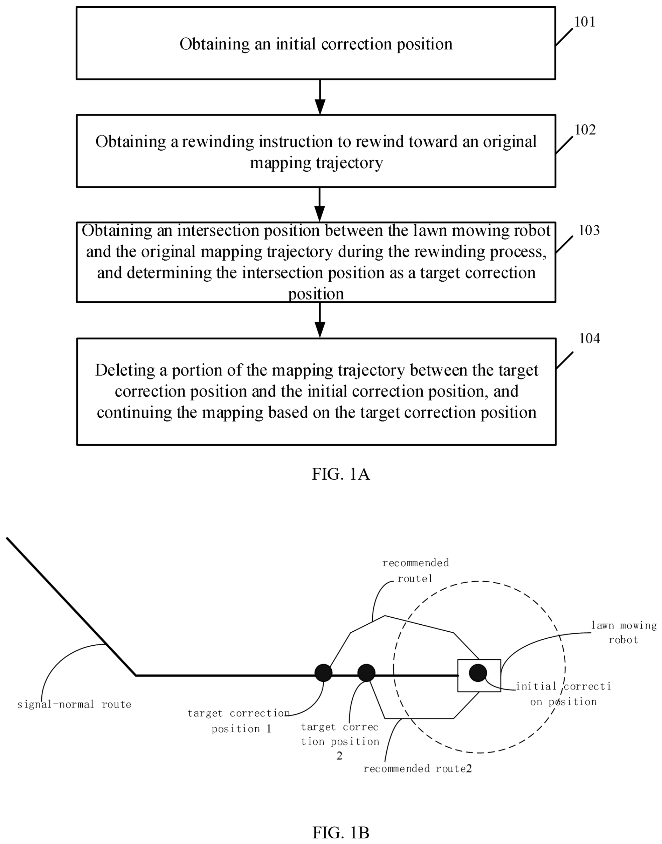

Please refer to Figure 1A. Figure 1A is a schematic flowchart of a mapping correction method provided by the embodiments of the present disclosure, which is applied to an electronic device. As shown, the mapping correction method comprises:
101.Obtaining an initial correction position.

In the embodiments of the present disclosure, the electronic device may include a lawn mowing robot or a display device.

In specific implementation, the electronic device may use indoor positioning technologies (such as Wireless Fidelity (Wi - Fi) positioning technology), satellite positioning technologies, etc. to perform positioning operations.

In specific implementation, the initial correction position may include the current position of the lawn mowing robot. The initial correction position may be understood as the position where the lawn mowing robot is located when a user realizes that there is an error in mapping.

Optionally, the step 101 of obtaining an initial correction position may comprise the following steps:
11. Detecting a first signal strength value of the lawn mowing robot.
12. When the first signal strength value is lower than a first preset threshold, determining a current position of the lawn mowing robot as the initial correction position.

Here, the first preset threshold may be pre-set or a system default value.

In the embodiments of the present disclosure, during the mapping process of the lawn mowing robot, the first signal strength value of the lawn mowing robot may be detected at preset time intervals. The preset time intervals may be pre - set or a system default value. The above - mentioned first signal strength value may be understood as the signal strength value of the positioning signal.

In the embodiments of the present disclosure, the first signal strength value of the lawn mowing robot may be detected. When the first signal strength value is lower than the first preset threshold, it indicates that a signal loss of the lawn mowing robot is detected. In this case, there is a high probability that an error occurs in the mapping trajectory. Then, the current position of the lawn mowing robot may be taken as the initial correction position to prompt the user to correct the mapping trajectory or to correct the mapping trajectory in a timely manner by itself, thereby improving the accuracy of the mapping trajectory.

In specific implementation, when the first signal strength value is lower than the first preset threshold, it may be understood that a signal loss is detected. Then, the mapping trajectory of the lawn mowing robot may be obtained. The mapping trajectory includes a plurality of waypoints, and each waypoint corresponds to a positioning time and a signal strength value. Of course, the mapping trajectory may also include a starting point.

In specific implementation, during the mapping process under the control of the user, the lawn mowing robot generally needs to be directly controlled by the user to drive to define the boundary of an area. During the driving process, the lawn mowing robot may drive into an area with a poor positioning signal (a dashed - line circle), etc. Therefore, it is necessary to re - plan part of the boundary.

In specific implementation, when the lawn mowing robot constructs a map by following a track under the control of the user, it can also transmit the position information of the lawn mowing robot to the display device in real time. The display device may display different colors on the screen according to the signal strength to prompt the user. For example, a green route is displayed when the signal strength is normal, and a red route is displayed when the signal strength is weak. The present disclosure is not limited to this.

Furthermore, when a user observes that the color of a certain tracking route is different from other routes, the user may reconstruct the tracking route. For example, under some obstructions, the lawn mowing robot can receive fewer satellites, resulting in inaccurate positioning. Through this prompting method, the user can be promptly and effectively reminded, improving the accuracy of the constructed boundaries or restricted areas.

In practical disclosures, when the lawn mowing robot is controlled to move to an area with a poor positioning signal, the lawn mowing robot may not be able to detect the signal loss in a timely manner, and the user will continue to control the lawn mowing robot to move forward. After moving a certain distance, the electronic device can prompt the user of the signal loss and remind the user to modify the boundary route.

Optionally, the step 11 of detecting the first signal strength value of the lawn mowing robot may include the following steps:
111. Obtaining a current position of the lawn mowing robot.
112. Determining a reference detection frequency corresponding to the current position.
113. Obtaining a target environmental parameters.
114. Determining a target adjustment parameter corresponding to the target environmental parameters.
115. Adjusting the reference detection frequency according to the target adjustment parameter to obtain a target detection frequency.
116. Detecting the first signal strength value of the lawn mowing robot according to the target detection frequency.

The target environmental parameters may include at least one of the following: weather, temperature, atmospheric pressure, grass attribute parameter, etc., which are not limited here. The grass attribute parameter may include at least one of the following: soil looseness, vegetation type, terrain parameters, etc., which are not limited here.

In specific implementation, a current position of the lawn mowing robot can be obtained. Also, according to a pre - set mapping relationship between positions and detection frequencies, a reference detection frequency corresponding to the current position can be determined. Furthermore, a target environmental parameters can be obtained. Then, based on a pre-set mapping relationship between environmental parameters and adjustment parameters, a target adjustment parameter corresponding to the target environmental parameters can be determined. Next, the reference detection frequency can be adjusted according to the target adjustment parameter to obtain the target detection frequency. Thus, a detection frequency suitable for the environment can be obtained. For example, if the terrain is complex, the detection frequency can be relatively higher. Subsequently, the first signal strength value of the lawn mowing robot can be detected according to the target detection frequency. In this way, whether the signal of the lawn mowing robot is lost can be detected in a timely manner, thereby ensuring the correctness and efficiency of mapping.

Optionally, when the first signal strength value is lower than the first preset threshold, the mapping correction method further comprises:
obtaining a confirmation instruction for the initial correction position; and/or issuing a prompt signal.

The form of the prompt signal may include at least one of the following: voice, vibration, flashing, text display, etc., which is not limited herein.

In specific implementation, after detecting the signal loss, a prompt signal may be issued after a preset time duration or after traveling a preset distance to respond to the error quickly and reduce the workload of reconstructing the map. The preset time duration and the preset distance may be pre - set or system - default. Alternatively, a confirmation instruction may be obtained, that is, a confirmation instruction for the initial correction position may be obtained to prompt the user to correct the mapping trajectory.

For example, when the lawn mowing robot is controlled to move to an area with a poor positioning signal, it may not be able to detect the signal loss in a timely manner, and the user will continue to control the lawn mowing robot to move forward. After traveling a certain distance, the control device or the display device can be used to prompt the user of the signal loss and remind the user to modify the boundary route. Thus, it can adapt to high - complexity mapping scenarios, such as scenarios with poor positioning signals, the lawn mowing robot being trapped, etc.

102. Obtaining a rewinding instruction to control the lawn mowing robot to rewind toward an original mapping trajectory.

The rewinding instruction may be input by the user, that is, the rewinding instruction is triggered by the electronic device to control the lawn mowing robot to rewind toward the original mapping trajectory. For example, when the user discovers a route error, after determining the initial correction position, the user can directly control the lawn mowing robot to return, or can make the lawn mowing robot automatically return by selecting a recommended route on the electronic device.

Optionally, the following steps may also be included:
A1. When the lawn mowing robot intersects with the original mapping trajectory, detecting a second signal strength value of the lawn mowing robot at the intersection position.
A2. When the second signal strength value is less than a set threshold, continuing to perform the step of rewind toward an original mapping trajectory.

The set threshold may be pre-set or a system-default value.

In the embodiments of the present disclosure, when the lawn mowing robot intersects with the original mapping trajectory, the second signal strength value of the lawn mowing robot at the intersection position can be detected. When the second signal strength value is less than the set threshold, it indicates that the lawn mowing robot still has a signal loss. Therefore, the step of rewind toward an original mapping trajectory can be continued. Thus, by continuing to rewind toward the original mapping trajectory, a high - quality target correction position can be ensured to be found, and the correctness of the mapping trajectory can be guaranteed.

In practical applications, during the mapping process, the lawn mowing robot generally requires the user to directly control its movement to define the boundaries of an area. During the movement, it may enter areas with poor positioning signals (the signal of the lawn mowing robot is weak in this area). In such cases, it is necessary to re - plan a part of the boundary route.

Of course, there may also be situations where, when the lawn mowing robot returns to the original mapping trajectory, its signal remains poor. In such cases, the lawn mowing robot can continue to rewind, thereby ensuring that it can return to a correction point with a good signal.

In specific implementation, when the lawn mowing robot constructs a map by following a track under the control of the user, it can also transmit the position information of the lawn mowing robot to the display device in real time. The display device may display different colors on the screen according to the signal strength to prompt the user. when a user observes that the color of a certain tracking route is different from other routes, the user may reconstruct the tracking route. For example, under some obstructions, the lawn mowing robot can receive fewer satellites, resulting in inaccurate positioning. Through this prompting method, the user can be promptly and effectively reminded, improving the accuracy of the constructed boundaries or restricted areas.

when the lawn mowing robot is controlled to move to an area with a poor positioning signal, it may not be able to detect the signal loss in a timely manner, and the user will continue to control the lawn mowing robot to move forward. After traveling a certain distance, the control device or the display device can be used to prompt the user of the signal loss and remind the user to modify the boundary route.

The user can control the lawn mowing robot to return to a position with a good signal on the original route. When the lawn mowing robot reaches the designated position and receives a signal to continue mapping, it will delete the positioning information and display information of the incorrect tracking route, and then continue to construct a new tracking route until the mapping is completed.

103.obtaining an intersection position between the lawn mowing robot and the original mapping trajectory during the rewinding process, and determining the intersection position as a target correction position.

In the embodiments of the present disclosure, during the rewinding process, the lawn mowing robot can be remotely controlled by a person to perform the rewind operation, and the intersection position between the lawn mowing robot and the original mapping trajectory is obtained and regarded as the target correction position.

Optionally, when the electronic device is a display device, the step 103 of obtaining an intersection position between the lawn mowing robot and the original mapping trajectory during the rewinding process may include the following steps:
31.Obtaining a current position of the lawn mowing robot.
32.During the rewinding process, determining a navigation route according to the current position.
33.Determining the intersection position between the navigation route and the original mapping trajectory.

In the embodiments of the present disclosure, the current position of the lawn mowing robot can be obtained, and a navigation route for returning from the current position to the original mapping trajectory can be determined. In specific implementation, the navigation route can be triggered by the user, or a path - planning algorithm can be used to generate at least one route between the current position and a target waypoint, and one of the routes can be selected as the navigation route. This navigation route can avoid various obstacles or ensure signal stability. Then, the lawn mowing robot is controlled to return to the intersection position based on the navigation route. Thus, it can be ensured that the lawn mowing robot can smoothly return to the intersection position, thereby ensuring the correctness of the lawn mowing robot's mapping.

In specific implementation, multiple navigation routes can be displayed for the user to choose from. As shown in Figure 1B, the thick - line sections represent signal - normal route, that is, correct mapping trajectories, and the areas within the dashed circles represent signal-loss areas. Recommended route 1 and recommended route 2 can be provided for the user to select, ensuring the correctness of the map construction.

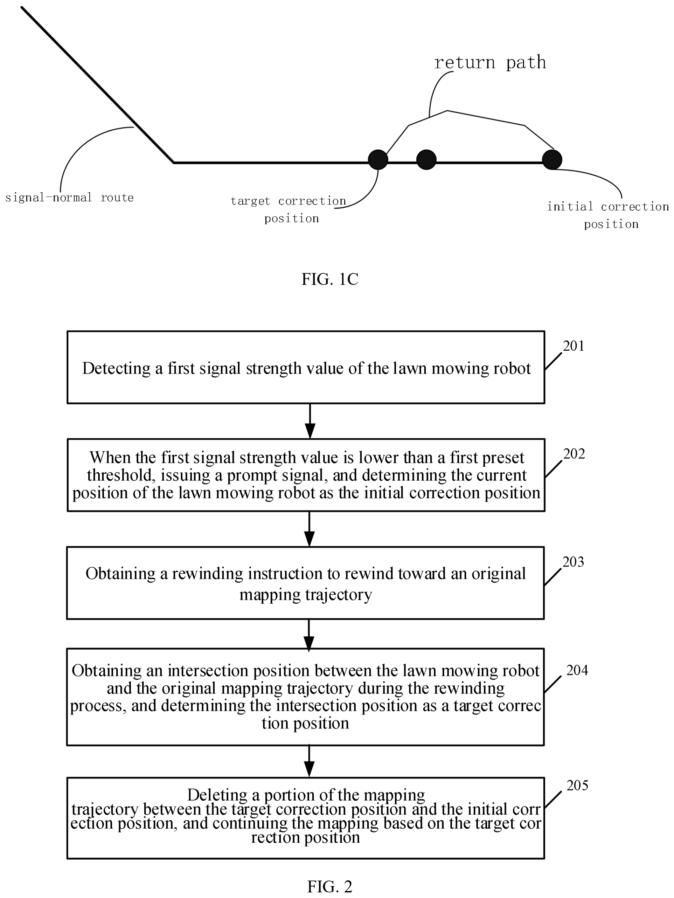

In specific implementation, only one navigation route (i.e., the return path) can also be displayed. As shown in Figure 1C, the thick - line sections represent signal - normal routes, that is, correct mapping trajectories. When an error occurs in the mapping trajectory, the initial correction position can be determined, and a rewind operation can be carried out. The intersection point between the return path and the original mapping trajectory is regarded as the target correction position, and the lawn mowing robot is returned to the target correction position to ensure the correctness of the map construction.

104. deleting a portion of the mapping trajectory between the target correction position and the initial correction position, and continuin g the mapping based on the target correction position.

In specific implementation, the mapping trajectory between the target correction position and the initial correction position can be deleted, that is, the incorrect mapping trajectory can be clipped off, and only the correct mapping trajectory can be retained. The map construction can be continued based on the target correction position, thereby ensuring the correctness of the map construction.

In the embodiments of the present disclosure, the user can select a suitable position to reconstruct and correct the route, without having to return to the initial point for reconstruction. Subsequently, the electronic device can control the lawn mowing robot to return to the target correction position. Specifically, when the electronic device is the lawn mowing robot, it can directly control itself to return to the target correction position. When the electronic device is the display device, the user can trigger the lawn mowing robot to autonomously reach the target correction position by pressing the buttons on the display device, or the user can remotely control the lawn mowing robot to reach the target correction position. That is, when an error occurs in the constructed map, the map can be timely and quickly reconstructed and corrected, improving the efficiency.

In specific implementation, the user can control the lawn mowing robot to return to a position with a good signal on the original route. When the lawn mowing robot reaches the designated position and receives a signal to continue mapping, it will delete the positioning information and display information of the incorrect tracking route, and then continue to construct a new tracking route until the mapping is completed, thereby ensuring the correctness of the map construction.

The method described in the embodiments of the present disclosure is applicable to the field of robots that require manual boundary construction. For example, this mapping correction method can be used to set the boundary of a restricted area within an operation map.

In the related art, when an error occurs in mapping, it is necessary to start the mapping process all over again, which has very low efficiency. In the automatic return solution, there are often factors that prevent the lawn mowing robot from returning. For example, due to incorrect tracking, the lawn mowing robot may enter an area without a satellite positioning signal or an area where it cannot retreat. Alternatively, there may be many obstacles in the return path, posing a relatively high safety risk for automatic return. However, the embodiments of the present disclosure can perform a return operation by visually selecting an effective position, avoiding the above - mentioned inefficient correction solutions and also circumventing the situations where the automatic return solution encounters non - returnable factors. In specific implementation, after an error occurs during mapping, the efficient correction solution in the embodiments of the present disclosure can adapt to complex terrain conditions.

Optionally, the following steps may also be included: when the lawn mowing robot overlaps with the original mapping trajectory, or when a distance between the lawn mowing robot and the original mapping trajectory is less than a preset distance, enlarging a display area corresponding to the original mapping trajectory and/or the position of the lawn mowing robot. Here, the preset distance may be pre-set or a system-default value.

In the embodiments of the present disclosure, when the lawn mowing robot overlaps with the original mapping trajectory or the distance between the lawn mowing robot and the original mapping trajectory is less than the preset distance, the display area corresponding to the original mapping trajectory may be enlarged, or the display area corresponding to the position of the lawn mowing robot may be enlarged, or the display areas corresponding to both the original mapping trajectory and the position of the lawn mowing robot may be enlarged simultaneously. The magnification factors for the original mapping trajectory and the position of the lawn mowing robot may be the same or different. Through the display interface, users can promptly detect errors through interaction, and the reconstruction and correction process can be visualized on the display interface, reducing the difficulty of reconstruction and correction and improving the user experience.

The mapping correction method described in the present disclosure is applied to an electronic device. The method includes obtaining an initial correction position, obtaining a rewinding instruction to rewind toward the original mapping trajectory, obtaining an intersection position between the lawn mowing robot and the original mapping trajectory during the rewinding process, and determining the intersection position as target correction position, deleting a portion of the mapping trajectory between the target correction position and initial correction position, and continuing the mapping based on the target correction position. In this way, when an error occurs in mapping or the positioning signal is lost, by deleting the track between the initial correction position and the target correction position of the lawn mowing robot and then continuing to perform the map construction instruction from the target correction position, the lawn mowing robot does not need to return to the starting point and re-construct the map when a mapping error occurs, thereby improving the mapping efficiency of the lawn mowing robot.

Please refer to Figure 2. Figure 2 is a schematic flowchart of another mapping correction method provided by the embodiments of the present disclosure, which is applied to an electronic device. As shown, the mapping correction method includes:
201. Detecting a first signal strength value of the lawn mowing robot.
202. When the first signal strength value is lower than a first preset threshold, issuing a prompt signal, and determining the current position of the lawn mowing robot as the initial correction position.
203. Obtaining a rewinding instruction to rewind toward an original mapping trajectory.
204. Obtaining an intersection position between the lawn mowing robot and the original mapping trajectory during the rewinding process, and determining the intersection position as a target correction position.
205. Deleting a portion of the mapping trajectory between the target correction position and the initial correction position, and continuin g the mapping based on the target correction position.

The specific descriptions of steps 201-205 can refer to the corresponding steps of the mapping correction method described in Figure 1A, and will not be repeated here.

The mapping correction method described in the present disclosure is applied to an electronic device. Detecting a first signal strength value of the lawn mowing robot, when the first signal strength value is lower than a first preset threshold, issuing a prompt signal, and determining the current position of the lawn mowing robot as the initial correction position, obtaining a rewinding instruction to rewind toward the original mapping trajectory, obtaining an intersection position between the lawn mowing robot and the original mapping trajectory during the rewinding process , and determining the intersection position as a target correction position, deleting a portion of the mapping trajectory between the target correction position and continuing the mapping based on the target correction position. In this way, when an error occurs in mapping or the positioning signal is lost, by deleting the track between the initial correction position and the target correction position of the lawn mowing robot and then continuing to perform the map construction instruction from the target correction position, the lawn mowing robot does not need to return to the starting point and re - construct the map when a mapping error occurs, thereby improving the mapping efficiency of the lawn mowing robot.

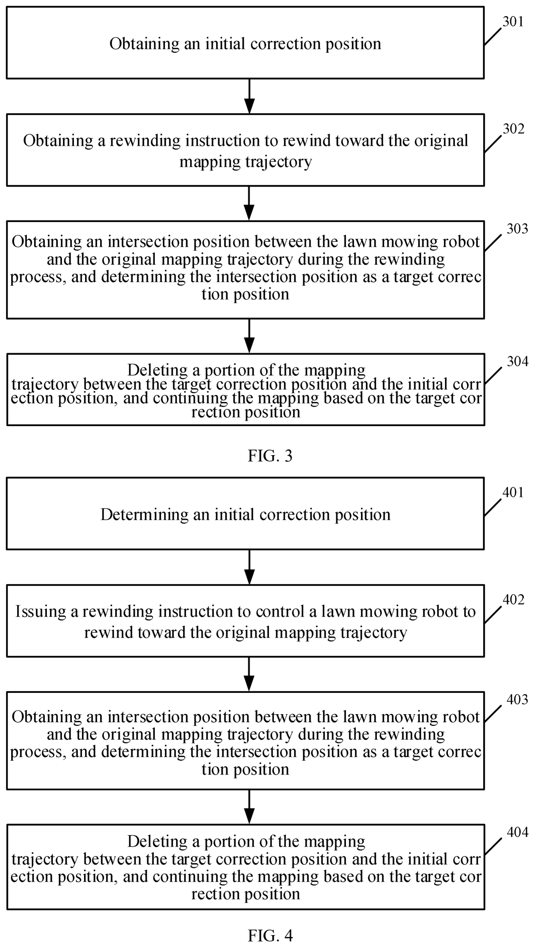

Please refer to Figure 3. Figure 3 is a schematic flowchart of another mapping correction method provided by the embodiments of the present disclosure, which is applied to a lawn mowing robot. As shown, the mapping correction method includes:
301.Obtaining an initial correction position.
302.Obtaining a rewinding instruction to rewind toward the original mapping trajectory.
303.Obtaining an intersection position between the lawn mowing robot and the original mapping trajectory during the rewinding process, and determining the intersection position as a target correction position.
304.Deleting a portion of the mapping trajectory between the target correction position and the initial correction position, and continuin g the mapping based on the target correction position.

The specific descriptions of steps 301-304 can refer to the corresponding steps of the mapping correction method described in Figure 1A, and will not be repeated here.

The mapping correction method described in the present disclosure is applied to a lawn mowing robot. It obtains an initial correction position, obtains a rewinding instruction to rewind toward the original mapping trajectory, obtains an intersection position between the lawn mowing robot and the original mapping trajectory during the rewinding process, determines the intersection position as a target correction position, deletes a portion of the mapping trajectory between the target correction position and the initial correction position, and continues to construct the map based on the target correction position. In this way, when an error occurs in mapping or the positioning signal is lost, by deleting a portion of the mapping trajectory between the initial correction position and the target correction position of the lawn mowing robot and then continuing to perform the map construction instruction from the target correction position, the lawn mowing robot does not need to return to the starting point and re-construct the map when a mapping error occurs, thereby improving the mapping efficiency of the lawn mowing robot.

Please refer to Figure 4. Figure 4 is a schematic flowchart of another mapping correction method provided by the embodiments of the present disclosure, which is applied to a display device. As shown, the mapping correction method includes:
401.Determining an initial correction position.
402.Issuing a rewinding instruction to control a lawn mowing robot to rewind toward the original mapping trajectory.
403.Obtaining an intersection position between the lawn mowing robot and the original mapping trajectory during the rewinding process, and determining the intersection position as a target correction position.
404.Deleting a portion of the mapping trajectory between the target correction position and the initial correction position, and continuin g the mapping based on the target correction position.

The specific descriptions of steps 401-404 can refer to the corresponding steps of the mapping correction method described in Figure 1A, and thus will not be reiterated here.

The mapping correction method described in the present disclosure is applied to a display device. It determines an initial correction position, issues a rewinding instruction to control the lawn mowing robot to rewind toward the original mapping trajectory, obtains an intersection position between the lawn mowing robot and the original mapping trajectory during the rewinding process, determines the intersection position as a target correction position, deletes the mapping trajectory between the target correction position and the initial correction position, and continues to construct the map based on the target correction position. In this way, when an error occurs in mapping or the positioning signal is lost, the lawn mowing robot does not need to return to the starting point and re - construct the map. Instead, it continues to perform the map construction instruction from the target correction position after the track between the initial correction position and the target correction position is deleted. This improves the mapping efficiency of the lawn mowing robot.

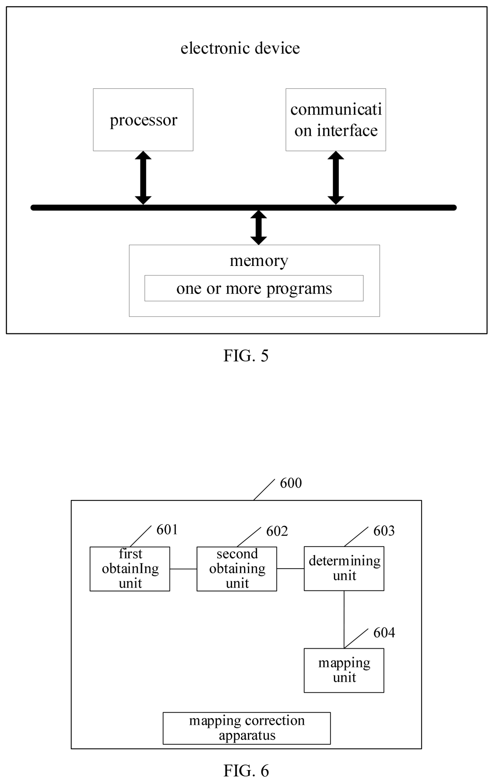

Consistent with the above embodiments, please refer to Figure 5. Figure 5 is a schematic structural diagram of an electronic device provided by the embodiments of the present disclosure. As shown, the electronic device includes a processor, a memory, a communication interface, and one or more programs. The one or more programs are stored in the memory and configured to be executed by the processor. In the embodiments of the present disclosure, the electronic device may include a lawn mowing robot and/or a display device.

Optionally, when the electronic device includes the lawn mowing robot, the aforementioned program includes instructions for executing the following steps:
obtaining an initial correction position;
obtaining a rewinding instruction to rewind toward the original mapping trajectory;
obtaining an intersection position between the lawn mowing robot and the original mapping trajectory during the rewinding process, and determining the intersection position as a target correction position;
deleting a portion of the mapping trajectory between the target correction position and the initial correction position, and continuin g the mapping based on the target correction position.

Optionally, in terms of obtaining the initial correction position, the aforementioned program includes instructions for executing the following steps:
detecting a first signal strength value of the lawn mowing robot;
when the first signal strength value is lower than a first preset threshold, determining a current position of the lawn mowing robot as the initial correction position.

Optionally, when the first signal strength value is lower than the first preset threshold, the aforementioned program further includes instructions for executing the following steps:
obtaining a confirmation instruction for the initial correction position; and/or
issuing a prompt signal.

Optionally, in detecting the first signal strength value of the lawn mowing robot, the aforementioned program includes instructions for executing the following steps:
obtaining a current position of the lawn mowing robot;
determining a reference detection frequency corresponding to the current position;
obtaining a target environmental parameters;
determining a target adjustment parameter corresponding to the target environmental parameters;
adjusting the reference detection frequency according to the target adjustment parameter to obtain a target detection frequency;
detecting the first signal strength value of the lawn mowing robot according to the target detection frequency.

Optionally, the aforementioned program further includes instructions for executing the following steps:
when the lawn mowing robot intersects with the original mapping trajectory, detecting a second signal strength value of the lawn mowing robot at the intersection position;
when the second signal strength value is less than a second preset threshold, continuing to perform the step of return in the direction of the original mapping trajectory.

Optionally, when the electronic device includes a display device, the aforementioned program includes instructions for executing the following steps:
determining an initial correction position;
issuing a rewinding instruction to control a lawn mowing robot to rewind toward the original mapping trajectory;
obtaining an intersection position between the lawn mowing robot and the original mapping trajectory during the rewinding process, and determining the intersection position as a target correction position;
deleting a portion of the mapping trajectory between the target correction position and the initial correction position, and continuin g the mapping based on the target correction position.

Optionally, in determining an initial correction position, the aforementioned program includes instructions for executing the following steps:
obtaining a first signal strength value of the lawn mowing robot;
when the first signal strength value is lower than a first preset threshold, determining a current position of the lawn mowing robot as the initial correction position.

Optionally, when the first signal strength value is lower than the first preset threshold, the aforementioned program further includes instructions for executing the following steps:
issuing a confirmation instruction for the initial correction position; and/or
issuing a prompt signal.

Optionally, the aforementioned program further includes instructions for executing the following steps:
when the lawn mowing robot overlaps with the original mapping trajectory, or when a distance between the lawn mowing robot and the original mapping trajectory is less than a preset distance, enlarging a display area corresponding to the original mapping trajectory and/or the position of the lawn mowing robot.

Optionally, in obtaining the intersection position between the lawn mowing robot and the original mapping trajectory during the rewinding process, the aforementioned program includes instructions for executing the following steps:
obtaining a current position of the lawn mowing robot;
during the rewinding process, determining a navigation route according to the current position;
determining the intersection position between the navigation route and the original mapping trajectory.

Optionally, the aforementioned program further includes instructions for executing the following steps:
when the lawn mowing robot intersects with the original mapping trajectory, detecting a second signal strength value of the lawn mowing robot at the intersection position;
when the second signal strength value is less than a second preset threshold, continuing to perform the step of return in the direction of the original mapping trajectory.

Figure 6 is a functional block diagram of a mapping correction apparatus 600 involved in the embodiments of the present disclosure. The mapping correction apparatus 600 is applied to a lawn mowing robot and includes: a first obtaining unit 601, a second obtaining unit 602, a determining unit 603, and a mapping unit 604.

The first obtaining unit 601 is configured to acquire an initial correction position.

The second obtaining unit 602 is configured to acquire a rewinding instruction to rewind toward the original mapping trajectory.

The determining unit 603 is configured to obtain an intersection position between the lawn mowing robot and the original mapping trajectory during the rewinding process and determine the intersection position as a target correction position.

The mapping unit 604 is configured to delete the mapping trajectory between the target correction position and the initial correction position and continue to construct a map based on the target correction position.

Optionally, in acquiring the initial correction position, the first obtaining unit 601 is specifically configured to:
Detect a first signal strength value of the lawn mowing robot;
when the first signal strength value is lower than a first preset threshold, take the current position of the lawn mowing robot as the initial correction position.

Optionally, when the first signal strength value is lower than the first preset threshold, the apparatus 600 is further specifically configured to:
Obtaining a confirmation instruction for the initial correction position; and/or
issuing a prompt signal.

Optionally, in detecting the first signal strength value of the lawn mowing robot, the first obtaining unit 601 is specifically configured to:
Obtaining a current position of the lawn mowing robot;
determining a reference detection frequency corresponding to the current position;
obtaining a target environmental parameters;
determining a target adjustment parameter corresponding to the target environmental parameters;
adjusting the reference detection frequency according to the target adjustment parameter to obtain a target detection frequency;
detecting the first signal strength value of the lawn mowing robot according to the target detection frequency.

Optionally, the apparatus 600 is further specifically configured to:
When the lawn mowing robot intersects with the original mapping trajectory, detecting a second signal strength value of the lawn mowing robot at the intersection position;
when the second signal strength value is less than a second preset threshold, continuing to perform the step of return in the direction of the original mapping trajectory.

The mapping correction apparatus described in the present disclosure is applied to a lawn mowing robot. It obtains an initial correction position, obtains a rewinding instruction to rewind toward the original mapping trajectory, obtains an intersection position between the lawn mowing robot and the original mapping trajectory during the rewinding process, determines the intersection position as a target correction position, deletes the mapping trajectory between the target correction position and the initial correction position, and continues to construct a map based on the target correction position. In this way, when an error occurs in mapping or the positioning signal is lost, by deleting the track between the initial correction position and the target correction position of the lawn mowing robot and then continuing to perform the map construction instruction from the target correction position, the lawn mowing robot does not need to return to the starting point and re-construct the map, thereby improving the mapping efficiency of the lawn mowing robot.

It can be understood that the functions of each program module of the mapping correction apparatus in this embodiment can be specifically implemented according to the methods in the above - mentioned method embodiments, and the specific implementation process can refer to the relevant descriptions in the above - mentioned method embodiments. Here, it is not repeated.

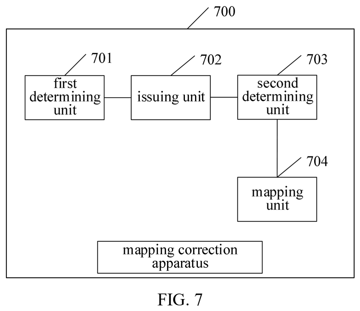

Figure 7 is a functional block diagram of a mapping correction apparatus 700 involved in the embodiments of the present disclosure. The mapping correction apparatus 700 is applied to a display device and includes: a first determining unit 701, an issuing unit 702, a second determining unit 703, and a mapping unit 704.

The first determining unit 701 is configured to determine an initial correction position.

The issuing unit 702 is configured to issue a rewinding instruction to control the lawn mowing robot to rewind toward the original mapping trajectory.

The second determining unit 703 is configured to obtain an intersection position between the lawn mowing robot and the original mapping trajectory during the rewinding process and determine the intersection position as a target correction position.

The mapping unit 704 is configured to delete the mapping trajectory between the target correction position and the initial correction position and continue to construct a map based on the target correction position.

Optionally, in determining the initial correction position, the first determining unit 701 is specifically configured to:
Obtain a first signal strength value of the lawn mowing robot.
when the first signal strength value is lower than a first preset threshold, take the current position of the lawn mowing robot as the initial correction position.

Optionally, when the first signal strength value is lower than the first preset threshold, the apparatus 700 is further specifically configured to:
issuing a confirmation instruction for the initial correction position; and/or
issuing a prompt signal.

Optionally, the apparatus 700 is further specifically configured to:
When the lawn mowing robot overlaps with the original mapping trajectory, or when a distance between the lawn mowing robot and the original mapping trajectory is less than a preset distance, enlarging a display area corresponding to the original mapping trajectory and/or the position of the lawn mowing robot.

Optionally, in obtaining the intersection position between the lawn mowing robot and the original mapping trajectory during the rewinding process, the issuing unit 702 is specifically configured to: obtain the current position of the lawn mowing robot.
Determine a navigation route during the rewinding process according to the current position;
determine the intersection position between the navigation route and the original mapping trajectory.

Optionally, the apparatus 700 is further specifically configured to:
When the lawn mowing robot intersects with the original mapping trajectory, detect a second signal strength value of the lawn mowing robot at the intersection position;
When the second signal strength value is lower than a second preset threshold, continue to perform the step of controlling the lawn mowing robot to rewind toward the original mapping trajectory.

The mapping correction apparatus described in the present disclosure is applied to a display device. It determines an initial correction position, issues a rewinding instruction to control the lawn mowing robot to rewind toward the original mapping trajectory, obtains an intersection position between the lawn mowing robot and the original mapping trajectory during the rewinding process, determines the intersection position as a target correction position, deletes the mapping trajectory between the target correction position and the initial correction position, and continues to construct a map based on the target correction position. In this way, when an error occurs in mapping or the positioning signal is lost, by deleting the track between the initial correction position and the target correction position of the lawn mowing robot and then continuing to perform the map construction instruction from the target correction position, the lawn mowing robot does not need to return to the starting point and re - construct the map, thereby improving the mapping efficiency of the lawn mowing robot.

It can be understood that the functions of each program module of the mapping correction apparatus in this embodiment can be specifically implemented according to the methods in the above - mentioned method embodiments, and the specific implementation process can refer to the relevant descriptions in the above - mentioned method embodiments. Here, it is not repeated.

The embodiments of the present disclosure further provide a computer storage medium. The computer storage medium stores a computer program for electronic data exchange. The computer program enables a computer to perform part or all of the steps of any method recorded in the method embodiments described above. The computer includes an electronic device.

The embodiments of the present disclosure further provide a computer program product. The computer program product includes a non - transitory computer - readable storage medium storing a computer program. The computer program is operable to enable a computer to perform part or all of the steps of any method recorded in the method embodiments described above. The computer program product may be a software installation package, and the computer includes an electronic device.

It should be noted that, for the foregoing method embodiments, for the sake of simple description, they are all described as a series of action combinations. However, those skilled in the art should understand that the present disclosure is not limited by the described action sequence, because according to the present disclosure, some steps may adopt other sequences or be performed simultaneously. Secondly, those skilled in the art should also understand that the embodiments described in the specification are all preferred embodiments, and the involved actions and modules are not necessarily essential to the present disclosure.

In the above embodiments, the descriptions of each embodiment have their own emphases. The parts not described in detail in a certain embodiment can be referred to the relevant descriptions in other embodiments.

In the several embodiments provided by the present disclosure, it should be understood that the disclosed system can be implemented in other ways. For example, the system embodiments described above are merely illustrative. For example, the division of the above units is only a logical function division. In actual implementation, there may be other division methods. For example, multiple units or components may be combined or integrated into another system, or some features may be ignored or not executed. Another point is that the coupling or direct coupling or communication connection shown or discussed may be an indirect coupling or communication connection through some interfaces, systems, or units, which may be electrical or in other forms.

The units described as separate components may or may not be physically separated. The components shown as units may or may not be physical units, that is, they may be located in one place or distributed on multiple network units. Part or all of them can be selected according to actual needs to achieve the purpose of the solution of the present embodiment.

In addition, in the various embodiments of the present disclosure, the functional units may be integrated into one processing unit, or each unit may exist physically alone, or two or more units may be integrated into one unit. The integrated units may be implemented in the form of hardware or in the form of software functional units.

If the integrated units are implemented in the form of software functional units and sold or used as independent products, they can be stored in a computer - readable memory. Based on such an understanding, the technical solution of the present disclosure, essentially or the part contributing to the prior art, or the whole or part of the technical solution may be embodied in the form of a software product. The computer software product is stored in a memory and includes a number of instructions for enabling a computer device (which may be a personal computer, a server, or a network device, etc.) to perform all or part of the steps of the methods of the various embodiments of the present disclosure. The aforementioned memory includes various media that can store program codes, such as a USB flash drive, a read - only memory (ROM), a random - access memory (RAM), a mobile hard disk, a magnetic disk, or an optical disk.

Those of ordinary skill in the art can understand that all or part of the steps of the various methods of the above embodiments can be completed by a program instructing relevant hardware. The program can be stored in a computer - readable memory. The memory may include a flash drive, a read - only memory (ROM), a random - access memory (RAM), a magnetic disk, or an optical disk.

The above provides a detailed introduction to the embodiments of the present disclosure. Specific examples are used in this article to illustrate the principles and implementation modes of the present disclosure. The descriptions of the above embodiments are only for helping to understand the methods and core ideas of the present disclosure. At the same time, for those of ordinary skill in the art, based on the ideas of the present disclosure, there will be changes in specific implementation modes and lawn mowing robot scopes. In conclusion, the content of this specification should not be understood as a limitation on the present disclosure.

## Claims

1. A mapping correction method, performed by a lawn mowing robot, comprising:
obtaining an initial correction position;
obtaining a rewinding instruction to rewind toward an original mapping trajectory;
obtaining an intersection position between the lawn mowing robot and the original mapping trajectory during the rewinding process, and determining the intersection position as a target correction position; and
deleting a portion of the mapping trajectory between the target correction position and the initial correction position, and continuing the mapping based on the target correction position.

2. The mapping correction method according to claim 1, wherein the obtaining the initial correction position comprises:
detecting a first signal strength value of the lawn mowing robot;
when the first signal strength value is lower than a first preset threshold, determining a current position of the lawn mowing robot as the initial correction position.

3. The mapping correction method according to claim 2, when the first signal strength value is lower than the first preset threshold, the method further comprises:
obtaining a confirmation instruction for the initial correction position; and/or
issuing a prompt signal.

4. The mapping correction method according to claim 2, wherein the detecting the first signal strength value of the lawn mowing robot comprises:
obtaining a current position of the lawn mowing robot;
determining a reference detection frequency corresponding to the current position;
obtaining target environmental parameters;
determining a target adjustment parameter corresponding to the target environmental parameters;
adjusting the reference detection frequency based on the target adjustment parameter to obtain a target detection frequency;
detecting the first signal strength value of the lawn mowing robot based on the target detection frequency.

5. The method according to any one of claims 1 to 4, wherein the method further comprises:
when the lawn mowing robot intersects with the original mapping trajectory, detecting a second signal strength value of the lawn mowing robot at the intersection position;
when the second signal strength value is less than a preset threshold, continuing to perform the step of rewinding toward an original mapping trajectory.

6. A mapping correction method , performed by a display device, comprising:
determining an initial correction position;
issuing a rewinding instruction to control a lawn mowing robot to rewind toward an original mapping trajectory;
obtaining an intersection position between the lawn mower and the original mapping trajectory during the rewinding process, and determining the intersection position as a target correction position;
deleting a portion of the mapping trajectory between the target correction position and the initial correction position, and continuing the mapping based on the target correction position.

7. The mapping correction method according to claim 6, wherein the determining the initial correction position comprises:
obtaining a first signal strength value of the lawn mowing robot;
when the first signal strength value is lower than a first preset threshold, determining a current position of the lawn mowing robot as the initial correction position.

8. The mapping correction method according to claim 7, wherein, when the first signal strength value is lower than the first preset threshold, the method further comprises:
issuing a confirmation instruction for the initial correction position; and/or
issuing a prompt signal.

9. The mapping correction method according to any one of claims 6 to 8, wherein the method further comprises:
when the lawn mowing robot overlaps with the original mapping trajectory, or when a distance between the lawn mowing robot and the original mapping trajectory is less than a preset distance, enlarging a display area corresponding to the original mapping trajectory and/or the position of the lawn mowing robot.

10. The mapping correction method according to claim 9, wherein the obtaining the intersection position between the lawn mower and the original mapping trajectory during the rewinding process, comprises:
obtaining a current position of the lawn mowing robot;
determining a navigation route based on the current position during the rewinding process;
determining the intersection position between the navigation route and the original mapping trajectory.

11. The mapping correction method according to any one of claims 6 to 8, wherein the method further comprises:
when the lawn mowing robot intersects with the original mapping trajectory, detecting a second signal strength value of the lawn mowing robot at the intersection position;
when the second signal strength value is less than a set threshold, continuing to perform the step of rewinding toward the original mapping trajectory.

12. A mapping correction apparatus, applied to a lawn mowing robot, the apparatus comprises: a first obtaining unit, a second obtaining unit, a determining unit, and a mapping unit, wherein:
the first obtaining unit is configured to obtain an initial correction position;
the second obtaining unit is configured to obtain a rewinding instruction to rewind toward the original mapping trajectory;
the determining unit is configured to obtain an intersection position between the lawn mowing robot and the original mapping trajectory during the rewinding period and determine the intersection position as a target correction position;
the mapping unit is configured to delete a portion of the mapping trajectory between the target correction position and the initial correction position and continue the mapping based on the target correction position.

13. A mapping correction apparatus, wherein the mapping correction apparatus is applied to a display device, the mapping correction apparatus comprises: a first determining unit, a issuing unit, a second determining unit, and a mapping unit, wherein:
the first determining unit is configured to determine an initial correction position;
the issuing unit is configured to issue a rewinding instruction to control a lawn mowing robot to rewind toward the original mapping trajectory;
the second determining unit is configured to determine an intersection position between the lawn mowing robot and the original mapping trajectory during the rewinding process and determine the intersection position as a target correction position;
the mapping unit is configured to delete a portion of the mapping trajectory between the target correction position and the initial correction position and continue the mapping based on the target correction position.

14. An electronic device, **characterized by** comprising a lawn mowing robot and a display device, the lawn mowing robot comprises a first processor and a first memory, the first memory is configured to store one or more first programs and is configured to be executed by the first processor, the first programs comprise instructions for performing the steps in the method according to any one of claims 1 to 5;
the display device comprises a second processor and a second memory, the second memory is configured to store one or more second programs and is configured to be executed by the second processor, the second programs comprise instructions for performing the steps in the method according to any one of claims 6 to 11.

15. A non-transitory computer-readable storage medium, **characterized by** storing a computer program for electronic data exchange, wherein the computer program enables a computer to perform the method according to any one of claims 1 to 5; and/or
the computer program enables a computer to perform the method according to any one of claims 6 to 11.
